# EUROPÄISCHE PATENTANMELDUNG

(11) **EP 4 748 674 A1**
(43) Veröffentlichungstag der Anmeldung: **27.05.2026**
(21) Anmeldenummer: 25213270.9
(22) Anmeldetag: 04.11.2025
(51) Int. Cl.: B60W 30/14, B60W 50/14, B60W 30/18, B60W 10/04, B60W 10/184, G08G 1/0962, G08G 1/0967

(54) **VERFAHREN ZUM BETREIBEN EINES FAHRERASSISTENZSYSTEMS, FAHRERASSISTENZSYSTEM UND KRAFTFAHRZEUG**

(30) Priorität: 13.11.2024 DE 102024210894
(71) Anmelder: Volkswagen Aktiengesellschaft, 38440 Wolfsburg (DE)
(72) Erfinder: Aminev, Timur, 38440 Wolfsburg (DE); Eigel, Thomas, 38440 Wolfsburg (DE); Busch, Sebastian, 38440 Wolfsburg (DE)

(57) **Zusammenfassung**

Die Erfindung betrifft ein Verfahren zum Betreiben eines Fahrerassistenzsystems (26) eines Kraftfahrzeugs (12) beim Befahren einer Kreuzung (10) in Abhängigkeit von einer erkannten rechts-vor-links Verkehrsregelung an der Kreuzung (10), umfassend die Schritte
a) Anfahren (S1) der Kreuzung (10) mit einer ursprünglich gesetzten Fahrtgeschwindigkeit,
b) bei Einfahren in einen vorbestimmten Umkreis um die Kreuzung (10), Erkennen (S2) der rechts-vor-links Verkehrsregelung an der Kreuzung (10), eines der Kreuzung (10) zugeordneten Haltepunkts (24) und eines der Kreuzung (10) zugeordneten Beschleunigungspunkts (22),
wobei das Fahrerassistenzsystem (26) bei einer Annäherung des Kraftfahrzeugs (12) an den Haltepunkt (24)
c) einen Hinweis bezüglich der erkannten rechts-vor-links Verkehrsregelung an einen Fahrer des Kraftfahrzeugs (12) erzeugt (S3), und/oder
d) selbstständig zum Reduzieren der ursprünglich gesetzten Fahrtgeschwindigkeit des Kraftfahrzeugs (12) auf eine gegenüber der ursprünglich gesetzten Fahrtgeschwindigkeit reduzierte Annäherungsgeschwindigkeit in ein Antriebssystem (28) des Kraftfahrzeugs (12) eingreift (S4).

## Beschreibung

Die Erfindung betrifft ein Verfahren zum Betreiben eines Fahrerassistenzsystems eines Kraftfahrzeugs, insbesondere eines Fahrerassistenzsystems zur automatischen Geschwindigkeits- und/oder Abstandskontrolle (Tempomat und/oder ACC - Adaptive Cruise Control), beim Befahren einer Kreuzung mit einer rechts-vor-links Verkehrsregelung (RvL Kreuzung). Die Erfindung betrifft außerdem ein solches Fahrerassistenzsystem und ein Kraftfahrzeug mit einem solchen Fahrerassistenzsystem.

Aus dem Bereich der Fahrerassistenzsysteme zur automatischen Geschwindigkeits- und/oder Abstandskontrolle ist es bekannt, eine Setzgeschwindigkeit festzusetzen, mit der ein Kraftfahrzeug entlang eines vorbestimmten Straßenabschnitts fahren soll. Dies kann durch einen Eingriff eines Fahrers erfolgen, oder auch automatisiert, zum Beispiel bei Erkennen eines Verkehrszeichens, das eine erlaubte Höchstgeschwindigkeit in dem Straßenabschnitt anzeigt. Systeme, die darüber hinaus auch über eine Abstandskontrollfunktion verfügen, können die aktuelle Setzgeschwindigkeit reduzieren, falls ein vorausfahrendes Fahrzeug mit einer geringeren Geschwindigkeit erkannt wird. Verringert sich der Abstand zu dem vorausfahrenden Fahrzeug, kann ein derartiges System die Setzgeschwindigkeit also an die Geschwindigkeit des langsameren vorausfahrenden Fahrzeugs anpassen, so dass die Gefahr für einen Auffahrunfall verringert wird bzw. ein konstanter Abstand zu dem vorausfahrenden Fahrzeug eingehalten wird.

Auf freier Strecke, beispielsweise beim Befahren eines Autobahnabschnitts oder eines Landstraßenabschnitts ohne Kreuzungen, Ampeln und dergleichen, ist es zumeist ausreichend, beim Einstellen einer aktuellen Fahrtgeschwindigkeit ein eventuell vorausfahrendes Fahrzeug oder ein anderes Zielobjekt zu berücksichtigen. Für den Fall, dass das Kraftfahrzeug (auch Ego-Fahrzeug) sich in einer komplexeren Verkehrsumgebung befindet, ist die Kenntnis weiterer Rahmenbedingungen von Vorteil, um ein Fahrerassistenzsystem der beschriebenen Art besonders harmonisch betreiben zu können, wobei damit vorliegend gemeint ist, dass das Fahrerassistenzsystem sich an einer typisch menschlichen Fahrweise orientiert.

Aus der DE 10 2021 214 509 A1 ist es beispielsweise bekannt, sogenannte Kontextinformationen beim Betreiben eines Abstandsregeltempomaten zu berücksichtigen. So kann beispielsweise beim Annähern an stehenden Verkehr im Bereich einer Ampel berücksichtigt werden, ob die Ampel zum Zeitpunkt des Annäherns von Rot-Gelb auf Grün umspringt, oder ob die Ampel zu diesem Zeitpunkt von Grün auf Gelb umspringt, so dass das Umspringen auf Rot unmittelbar bevorsteht. Im ersten Fall kann in den normalerweise vorgesehenen Abstand zum stehenden Verkehr "eingetaucht" werden, weil davon ausgegangen wird, dass dieser in naher Zukunft wieder anfahren wird. Im zweiten Fall wird ein frühzeitiges Abbremsen ausgelöst, um sicher hinter dem stehenden Verkehr zum Halten zu kommen. Auch eine erkannte rechts-vor-links Regelung an einer Kreuzung wird als Kontextinformation berücksichtigt, wobei nicht ersichtlich ist, inwieweit dies den Betrieb des Abstandsregeltempomaten beeinflusst.

Aus der DE 10 2015 212 027 A1 ist pauschal bekannt, Verkehrsregelungen an Kreuzungen zu ermitteln, um dann Fahrerassistenzsysteme verbessert betreiben zu können.

Die Verkehrsverhältnisse an Kreuzungen mit rechts-vor-links Verkehrsregelung, kurz im vorliegenden Kontext auch als RvL Kreuzungen bezeichnet, sind ungleich komplexer, als die Verkehrsverhältnisse an Kreuzungen, deren Befahrung beispielsweise durch Ampeln und/oder Beschilderung geregelt ist. Dementsprechend sind die Herausforderungen für den Betrieb eines Fahrerassistenzsystems der eingangs beschriebenen Art im Bereich solcher RvL Kreuzungen auch ungleich größer, als im Bereich "geregelter" Kreuzung, wie Ampel-Kreuzungen oder auch beschilderter Kreuzungen.

Eine Aufgabe der vorliegenden Erfindung besteht daher darin, den Betrieb eines Fahrerassistenzsystems der eingangs beschriebenen Art im Bereich von RvL Kreuzungen zu verbessern, d.h. an menschliches Fahrverhalten anzunähern, um dort den Verkehrsfluss zu verbessern und ultimativ die Verkehrssicherheit weiter zu erhöhen.

Die Aufgabe wird durch die Gegenstände der unabhängigen Patentansprüche gelöst. Vorteilhafte Weiterbildungen der Erfindung sind in der nachfolgenden Beschreibung, den Figuren und den abhängigen Ansprüchen beschrieben.

Die Erfindung betrifft ein Verfahren zum Betreiben eines Fahrerassistenzsystems eines Kraftfahrzeugs beim Befahren einer Kreuzung in Abhängigkeit von einer erkannten rechts-vor-links Verkehrsregelung an der Kreuzung. Bei dem Fahrerassistenzsystem handelt es sich bevorzugt um einen Abstandsregeltempomaten, also ein Fahrerassistenzsystem, das in ein Antriebssystem des Kraftfahrzeugs eingreift oder dieses steuert, um eine aktuelle Fahrtgeschwindigkeit des Kraftfahrzeugs einzustellen und/oder zu halten und bevorzugt einen Abstand zu einem vorausfahrenden Fahrzeug konstant zu halten.

Das Verfahren umfasst die vollständig oder teilweise durch das Fahrerassistenzsystem durchgeführten Schritte
a) Anfahren der Kreuzung mit einer ursprünglich gesetzten Fahrtgeschwindigkeit,
b) bei Einfahren in einen vorbestimmten Umkreis um die Kreuzung, Erkennen der rechts-vor-links Verkehrsregelung an der Kreuzung, eines der Kreuzung zugeordneten Haltepunkts und eines der Kreuzung zugeordneten Beschleunigungspunkts,
   wobei das Fahrerassistenzsystem bei einer Annäherung des Kraftfahrzeugs an den Haltepunkt
c) einen Hinweis bezüglich der erkannten rechts-vor-links Verkehrsregelung an einen Fahrer des Kraftfahrzeugs erzeugt, und/oder
d) selbstständig zum Reduzieren der ursprünglich gesetzten Fahrtgeschwindigkeit des Kraftfahrzeugs auf eine gegenüber der ursprünglich gesetzten Fahrtgeschwindigkeit reduzierte Annäherungsgeschwindigkeit in ein Antriebssystem des Kraftfahrzeugs eingreift.

Dem erfindungsgemäßen Verfahren kann also die Situation zugrunde liegen, dass das Kraftfahrzeug sich mit der ursprünglich gesetzten Fahrtgeschwindigkeit oder Setzgeschwindigkeit der Kreuzung nähert. Die Setzgeschwindigkeit kann dem Fahrerassistenzsystem manuell von einem Fahrer des Kraftfahrzeugs vorgegeben sein. Mit anderen Worten kann der Fahrer beispielsweise eine Geschwindigkeit von 50 km/h in dem Fahrerassistenzsystem eingestellt haben. Alternativ kann das Fahrerassistenzsystem die Setzgeschwindigkeit automatisiert eingestellt haben. Beispielsweise kann es zur automatisierten Einstellung auf erkannte Straßenschilder zurückgreifen, die eine Höchstgeschwindigkeit von 50 km/h im aktuell befahrenen Straßenabschnitt vorschreiben. Dem Fahrerassistenzsystem können alternativ oder zusätzlich Kartendaten mit Straßenattributen zum aktuell befahrenen Straßenabschnitt vorliegen, aus denen es die Setzgeschwindigkeit von 50 km/h auslesen kann. Natürlich sind auch andere konkrete Geschwindigkeiten als Setzgeschwindigkeit denkbar, beispielsweise 20, 30, 40, 60, 80 oder 100 km/h oder mehr.

Sobald das Kraftfahrzeug in einen vorbestimmten Umkreis um die Kreuzung eindringt oder einfährt, führt das Fahrerassistenzsystem eine Kreuzungserkennung durch. Diese kann umfassen, dass das Fahrerassistenzsystem aus den bereits erwähnten Kartendaten ein Kreuzungsattribut der Kreuzung abruft, das beispielsweise beschreiben kann, dass es sich bei der Kreuzung um eine RvL Kreuzung handelt. Das Fahrerassistenzsystem kann die Kreuzung daraufhin als RvL Kandidatenkreuzung einstufen und eine weitere Plausibilisierung dieser Einstufung vornehmen, indem es beispielsweise Sensordaten von Kamerasensoren des Kraftfahrzeugs auswertet, um zu ermitteln, ob an der Kreuzung doch eine andere Verkehrsregelung herrscht, beispielsweise weil temporär Baustellenampeln an der Kreuzung aufgestellt sind. Solche Baustellenampeln könnten als weitere Infrastrukturkomponenten erkannt werden, die gegen eine aktuelle RvL Regelung an der Kreuzung sprechen.

Bestätigt sich jedoch die Einstufung als RvL Kreuzung, so kann das Fahrerassistenzsystem einen der Kreuzung zugeordneten Haltepunkt und einen der Kreuzung zugeordneten Beschleunigungspunkt erkennen oder berechnen. Der Haltepunkt und der Beschleunigungspunkt können diejenigen Punkte im Bereich der Kreuzung sein, an denen vorausfahrende Fahrzeuge typischerweise oder in statistisch relevanter Anzahl halten bzw. wieder beschleunigen. Zum Ermitteln dieser Punkte kann das Fahrerassistenzsystem beispielsweise auf Schwarmdaten von Fremdfahrzeugen zugreifen, die die Kreuzung bereits befahren haben. Alternativ oder zusätzlich können der Haltepunkt und/oder der Beschleunigungspunkt als Punkte in einem vorbestimmten Abstand zum Kreuzungsmittelpunkt festgesetzt sein und beispielsweise als Kreuzungsattribute der Kreuzung in den Kartendaten zugeordnet sein.

Erfindungsgemäß findet die nächste Aktion des Fahrerassistenzsystems statt, wenn sich das Kraftfahrzeug an den Haltepunkt annähert, das heißt, wenn sich das Kraftfahrzeug auf den Haltepunkt zu bewegt. Dabei bewegt sich das Kraftfahrzeug definitionsgemäß bereits innerhalb des vorbestimmten Umkreises um die Kreuzung.

Gemäß einer ersten Variante des erfindungsgemäßen Verfahrens erzeugt das Fahrerassistenzsystem bei Annäherung des Kraftfahrzeugs an den Haltepunkt einen Hinweis bezüglich der erkannten rechts-vor-links Verkehrsregelung an einen Fahrer des Kraftfahrzeugs. Dieser Hinweis kann in einer optischen und/oder haptischen und/oder akustischen Signalgebung an den Fahrer erfolgen, beispielsweise durch eine Anzeige in einem Head-up-Display des Kraftfahrzeugs und/oder in einer Lenkradvibration und/oder in der Ausgabe eines Warntons. Dann kann der Fahrer selbst entscheiden, wie er mit dieser Information umgeht. Er kann daraufhin selber eine Überwachung hinsichtlich vorfahrtberechtigten Querverkehrs beginnen, zum Beispiel indem er die Kreuzung beobachtet. Alternativ oder zusätzlich kann er einen Sensor des Kraftfahrzeugs hierzu aktivieren, beispielsweise ein Front-Eck-Radar des Kraftfahrzeugs. Er kann alternativ oder zusätzlich den Abruf weiterer Daten anfordern, beispielsweise von Kameradaten einer Verkehrsüberwachungskamera an der Kreuzung und/oder von Schwarmdaten, also von Sensordaten von Fremdfahrzeugen, die eine bessere Kreuzungseinsicht haben, als er oder die Sensoren den Ego-Fahrzeugs.

Gemäß einer zweiten Variante des erfindungsgemäßen Verfahrens greift das Fahrerassistenzsystem bei Annäherung des Kraftfahrzeugs an den Haltepunkt selbstständig zum Reduzieren der ursprünglich gesetzten Fahrtgeschwindigkeit des Kraftfahrzeugs auf eine gegenüber der ursprünglich gesetzten Fahrtgeschwindigkeit reduzierte Annäherungsgeschwindigkeit in ein Antriebssystem des Kraftfahrzeugs ein. Das Fahrerassistenzsystem bremst also das Kraftfahrzeug ab, wobei auch das Abbremsen als haptischer Hinweis gemäß der ersten beschriebenen Variante an den Fahrer verstanden werden kann, dass sich das Kraftfahrzeug einer RvL Kreuzung nähert. Durch das automatische Abbremsen wird dem Fahrer mehr Zeit gegeben, sich einen Überblick über die Verkehrssituation an der Kreuzung zu verschaffen. Das Fahrerassistenzsystem kann dann ebenfalls die Überwachung der Kreuzung im Hinblick auf vorfahrtsberechtigten Querverkehr initialisieren oder starten. Das Fahrerassistenzsystem kann hierzu ebenfalls einen Sensor des Kraftfahrzeugs aktivieren, beispielsweise das Front-Eck-Radar des Kraftfahrzeugs. Es kann alternativ oder zusätzlich den Abruf weiterer Daten anfordern, beispielsweise von Kameradaten der Verkehrsüberwachungskamera an der Kreuzung und/oder von Schwarmdaten, also von Sensordaten von Fremdfahrzeugen, die eine bessere Kreuzungseinsicht haben, als die Sensoren den Ego-Fahrzeugs.

Durch die Erfindung ergibt sich der Vorteil, dass der Betrieb des Fahrerassistenzsystems auf die speziellen Anforderungen beim Befahren einer RvL Kreuzung angepasst werden kann. Bei beiden beschriebenen Varianten wird durch die Verfahrensschritte, die in Abhängigkeit von einer Annäherung an den vorab bestimmten Haltepunkt durchgeführt werden, ausreichend Zeit für eine Reaktion des Fahrers oder auch des Fahrerassistenzsystems zur Verfügung gestellt. Das Erkennen des Haltepunkts und die darauf abgestimmten Verfahrensschritte gehen über das reine Erkennen einer RvL Kreuzung hinaus und bieten den genannten Vorteil, dass sich sowohl der Fahrer als auch das Fahrerassistenzsystem gezielt auf die spezielle Verkehrssituation an der RvL Kreuzung vorbereiten kann, was beispielsweise eine Überwachung von vorfahrtsberechtigtem Querverkehr umfasst.

Die Erfindung umfasst auch Ausführungsformen, durch die sich weitere Vorteile ergeben.

Eine Ausführungsform sieht vor, dass als Hinweis gemäß Schritt c) ein optischer und/oder ein akustischer und/oder ein haptischer Hinweis für den Fahrer erzeugt wird, wobei der Hinweis insbesondere die Reduzierung der ursprünglich gesetzten Fahrtgeschwindigkeit gemäß Schritt d) umfasst. Es ergeben sich die genannten Vorteile.

Eine weitere Ausführungsform sieht vor, dass das Fahrerassistenzsystem zusätzlich die Schritte durchführt:
e) sensorbasiertes Überwachen der Kreuzung im Hinblick auf vorfahrtsberechtigten Querverkehr, wobei
   falls vorfahrtsberechtigter Querverkehr erkannt wird,
f) Abbremsen des Kraftfahrzeugs zum Stillstand am Haltepunkt, und
   falls kein vorfahrtsberechtigter Querverkehr erkannt wird,
g) selbstständiges Eingreifen in das Antriebssystem des Kraftfahrzeugs zum Beschleunigen des Kraftfahrzeugs ab dem Beschleunigungspunkt auf die ursprünglich gesetzte Fahrtgeschwindigkeit zum Durchfahren der Kreuzung.

Das sensorbasierte Überwachen der Kreuzung gemäß Schritt e) kann bereits ab Eintritt in den vorbestimmten Umkreis um die Kreuzung erfolgen. Es kann auch zu einem späteren Zeitpunkt gestartet werden, beispielsweise sobald die Kreuzung als RvL Kreuzung erkannt wurde oder auch erst ab Annäherung an den Haltepunkt.

Falls vorfahrtsberechtigter Querverkehr erkannt wird, greift das Fahrerassistenzsystem in das Antriebssystem des Kraftfahrzeugs derart ein, dass das Kraftfahrzeug spätestens am Haltepunkt zum Stillstand kommt und dort auch gehalten wird, bis der vorfahrtsberechtigte Querverkehr die Kreuzung wieder verlassen hat. Wenn der vorfahrtsberechtigte Querverkehr die Kreuzung wieder verlassen hat, kann dies als Zustand "kein vorfahrtsberechtigter Querverkehr erkannt" erkannt werden. Daraufhin erfolgt eine Beschleunigung des Ego-Fahrzeugs aus dem Stillstand und ein Durchfahren der Kreuzung. In diesem Fall fallen also der Haltepunkt und der Beschleunigungspunkt zusammen, da das Kraftfahrzeug ab dem Haltepunkt beschleunigt. Mit anderen Worten imitiert das Fahrerassistenzsystem das menschliche Fahrverhalten, indem es das Kraftfahrzeug vor Einfahrt in die Kreuzung zum Stillstand abbremst, sofern vorfahrtsberechtigter Querverkehr im Bereich der Kreuzung erkannt wird. Dabei gilt der Querverkehr bevorzugt als vorfahrtsberechtigt, wenn er aus Sicht des Kraftfahrzeugs von rechts kommt und der Kreuzung schon so nah ist, dass das Kraftfahrzeug es nicht mehr vor dem Querverkehr über die Kreuzung schaffen würde. Alternativ oder zusätzlich kann die Fahrtgeschwindigkeit des Querverkehrs erfasst werden und basierend darauf berechnet werden, wann mit einer Ankunft des Querverkehrs bzw. eines Fahrzeugs des Querverkehrs auf der Kreuzung zu rechnen ist. Liegt dieser Zeitpunkt näher als ein vorbestimmter Schwellenwert, beispielsweise unterhalb von 15 Sekunden, kann das Fahrzeug als vorfahrtsberechtigter Querverkehr erkannt werden.

Wie beschrieben, kann die Erkennung des Querverkehrs durch fahrzeugeigene Sensoren und/oder durch infrastrukturseitige Sensoren einer oder mehrerer Infrastrukturkomponenten an der Kreuzung oder auch anhand von Sensordaten von Fremdfahrzeugen erkannt werden. Beispielsweise kann auch ein Fahrzeug, das selbst zum vorfahrtsberechtigten Querverkehr gehört, seine Anwesenheit per Fahrzeug-zu-Fahrzeug-Kommunikation an das Ego-Fahrzeug signalisieren.

Falls kein vorfahrtsberechtigter Querverkehr erkannt wird, insbesondere bevor das Kraftfahrzeug den Haltepunkt erreicht hat und dort zum Stillstand kommt, kann das Fahrerassistenzsystem das Abbremsen auf die Annäherungsgeschwindigkeit selbstständig wieder beenden oder lösen. Auch hier wird also wieder menschliches Fahrverhalten imitiert, wobei nach einem anfänglichen Abbremsen bei fehlendem vorfahrtsberechtigtem Querverkehr wieder beschleunigt wird, um die Kreuzung zügig zu überqueren. Gemäß der beschriebenen Ausführungsform findet die Beschleunigung ab dem erkannten Beschleunigungspunkt statt, der hier in Fahrtrichtung vor dem Haltepunkt liegt. Hierdurch ergibt sich der Vorteil, dass sich ein komfortables Fahrgefühl für die Fahrzeuginsassen einstellt und dass der Verkehrsfluss möglichst wenig gestört wird.

Je nach Kreuzungscharakteristik kann der Beschleunigungspunkt also mit dem Haltepunkt zusammenfallen oder sich auch von diesem unterscheiden. Für den Fall einer sehr beschränkt einsehbaren Kreuzung oder für den Fall, dass wenig Informationen bezüglich des aktuellen Verkehrsgeschehens auf der Kreuzung oder im Bereich der Kreuzung aus anderen Quellen vorliegen, wird der Beschleunigungspunkt eher mit dem Haltepunkt zusammenfallen. Bei gut einsehbaren Kreuzungen kann der Beschleunigungspunkt auch in Fahrtrichtung vor dem Haltepunkt liegen, so dass das Kraftfahrzeug gar nicht erst zum Stillstand am Haltepunkt kommt, sondern, sofern kein vorfahrtsberechtigter Querverkehr erkannt wird, bereits vor Erreichen des Haltepunktes wieder auf die Setzgeschwindigkeit beschleunigt wird.

Wie beschrieben, kann es vorgesehen sein, dass das Fahrerassistenzsystem zum sensorbasierten Überwachen gemäß Schritt e) kraftfahrzeugeigene Sensoren ansteuert und/oder Sensordaten von Sensoren zumindest einer Infrastrukturkomponente im Bereich der Kreuzung und/oder Sensordaten von Fremdfahrzeugen im Bereich der Kreuzung empfängt und auswertet. Hierdurch ergibt sich der Vorteil einer möglichst breiten Datenbasis zum Einordnen des aktuellen Verkehrsgeschehens im Bereich der Kreuzung.

Eine weitere Ausführungsform sieht vor, dass das Fahrerassistenzsystem zum Erkennen der rechts-vor-links Verkehrsregelung an der Kreuzung gemäß Schritt b) zunächst
b1) Kandidatenkreuzungen, die rechts-vor-links Kreuzungen sein könnten, anhand von Sensordaten eines Kamerasensors des Kraftfahrzeugs und/oder anhand von Sensordaten von Fremdfahrzeugen im Bereich einer jeweiligen Kreuzung und/oder anhand von Kartendaten bestimmt, und dann
b2) die Kandidatenkreuzungen als rechts-vor-links Kreuzungen verifiziert oder falsifiziert, basierend auf der Erkennung weiterer Infrastrukturkomponenten an einer jeweiligen Kreuzung. Hierdurch ergibt sich der Vorteil, dass die Erkennung der RvL Kreuzungen sehr zuverlässig und zugleich effizient erfolgen kann.

Eine weitere Ausführungsform befasst sich mit dem Erkennen von Haltepunkt und Beschleunigungspunkt. Demnach führt das Fahrerassistenzsystem zum Erkennen des der Kreuzung zugeordneten Haltepunkts und des der Kreuzung zugeordneten Beschleunigungspunkts gemäß Schritt b) eine statistische Auswertung einer Vielzahl von Geschwindigkeitsprofilen von Fremdfahrzeugen beim vorangegangenen Befahren der Kreuzung durch. Dabei werden Geschwindigkeitsprofile solcher Fahrzeuge ausgewertet, die auf einer ähnlichen Fahrtrajektorie die Kreuzung befahren haben, wie sie für das Ego-Fahrzeug bevorsteht. Mit anderen Worten werden die Geschwindigkeitsprofile von Befahrungen der Kreuzung ausgewertet, die der Befahrung oder der geplanten Befahrung der Kreuzung durch das Ego-Fahrzeug entsprechen oder ähneln. Bevorzugt wird dabei berücksichtigt, ob bei einem jeweiligen vorangegangen Befahren der Kreuzung durch ein Fremdfahrzeug vorfahrtsberechtigter Querverkehr vorhanden war, oder nicht. Je nachdem, ob vorfahrtsberechtigter Querverkehr vorhanden ist, oder nicht, kann sich die Lage des Haltepunkts und ganz besonders des Beschleunigungspunkts ändern. Wird beispielsweise frühzeitig erkannt, dass kein vorfahrtsberechtigter Querverkehr vorhanden ist, kann sehr viel früher wieder beschleunigt werden, als wenn vorfahrtsberechtigter Querverkehr vorhanden ist. Sollte also beispielsweise im konkreten Anwendungsfall das Kraftfahrzeug bei Annäherung an den Haltepunkt abgebremst werden und es wird kein vorfahrtsberechtigter Querverkehr erkannt, kann sich der Einsatz der Beschleunigung an demjenigen statistischen Beschleunigungspunkt orientieren, der aus Geschwindigkeitsprofilen solcher Befahrungen von Fremdfahrzeugen hervorgeht, bei denen auch kein vorfahrtsberechtigter Querverkehr vorhanden war. Andererseits kann für den Fall, dass bei Annäherung an den Haltepunkt vorfahrtsberechtigter Querverkehr erkannt wird, sich die Beschleunigung des Ego-Fahrzeugs an demjenigen statistischen Beschleunigungspunkt orientieren, der aus Geschwindigkeitsprofilen solcher Befahrungen von Fremdfahrzeugen hervorgeht, bei denen ebenfalls vorfahrtsberechtigter Querverkehr vorhanden war.

Eine weitere Ausführungsform sieht vor, dass das Reduzieren der ursprünglich gesetzten Fahrtgeschwindigkeit gemäß Schritt d) das Verlangsamen des Kraftfahrzeugs um einen vorbestimmten Prozentsatz und/oder das Verlangsamen des Kraftfahrzeugs um einen absoluten Geschwindigkeitswert umfasst. Dies kann beispielsweise in Abhängigkeit von der Setzgeschwindigkeit festgelegt werden.

Ein weiterer Aspekt der Erfindung betrifft ein Fahrerassistenzsystem für ein Kraftfahrzeug, das auch als ein elektronisches Fahrzeugführungssystem bezeichnet werden kann.

Unter einem elektronischen Fahrzeugführungssystem kann ein elektronisches System verstanden werden, das dazu eingerichtet ist, ein Fahrzeug vollautomatisch oder vollautonom zu führen, insbesondere ohne dass ein Eingriff in eine Steuerung durch einen Fahrer erforderlich ist. Das Fahrzeug führt alle erforderlichen Funktionen, wie Lenk-, Brems- und/oder Beschleunigungsmanöver, die Beobachtung und Erfassung des Straßenverkehrs sowie entsprechende Reaktionen automatisch durch. Insbesondere kann das elektronische Fahrzeugführungssystem einen vollautomatischen oder vollautonomen Fahrmodus des Fahrzeugs nach Stufe 5 der Klassifizierung gemäß SAE J3016 implementieren. Unter einem elektronischen Fahrzeugführungssystem kann auch ein Fahrerassistenzsystem (englisch: "advanced driver assistance system", ADAS) verstanden werden, welches den Fahrer beim teilweise automatisierten oder teilautonomen Fahren unterstützt. Insbesondere kann das elektronische Fahrzeugführungssystem einen teilweise automatisierten oder teilautonomen Fahrmodus nach den Stufen 1 bis 4 gemäß der SAE J3016-Klassifizierung implementieren. Hier und im Folgenden bezieht sich "SAE J3016" auf die entsprechende Norm in der Version vom April 2021.

Die wenigstens teilweise automatische Fahrzeugführung kann es daher beinhalten, das Fahrzeug gemäß eines vollautomatischen oder vollautonomen Fahrmodus der Stufe 5 nach SAE J3016 zu führen. Die wenigstens teilweise automatische Fahrzeugführung kann auch beinhalten, das Fahrzeug gemäß eines teilweise automatisierten oder teilautonomen Fahrmodus nach den Stufen 1 bis 4 nach SAE J3016 zu führen.

Hierzu kann wenigstens ein Steuersignal beispielsweise einem oder mehreren Aktuatoren des Fahrzeugs bereitgestellt werden, darunter beispielsweise einem oder mehreren Bremsaktuatoren und/oder einem oder mehreren Lenkaktuatoren und/oder einem oder mehreren Antriebsmotoren des Fahrzeugs. Der eine oder die mehreren Aktuatoren können basierend auf dem wenigstens einen Steuersignal eine Längs- und/oder Quersteuerung des Fahrzeugs beeinflussen, um das Fahrzeug zumindest teilweise automatisch zu führen.

Assistenzinformationen zu teilweise autonom durchgeführten Fahrmanövern können über ein Ausgabegerät des Fahrzeugs ausgegeben werden, beispielsweise ein Display und/oder ein Audio-Ausgabesystem und/oder ein haptisches Ausgabesystem.

Ein weitere Aspekt der Erfindung betrifft ein Kraftfahrzeug mit einem solchen Fahrerassistenzsystem. Bei dem Kraftfahrzeug kann es sich um einen Personenkraftwagen, einen Lastkraftwagen oder auch um ein Motorrad handeln.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Zu der Erfindung gehören auch Weiterbildungen des erfindungsgemäßen Kraftfahrzeugs und/oder des erfindungsgemäßen Fahrerassistenzsystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs und/oder des erfindungsgemäßen Fahrerassistenzsystems hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: eine schematische Darstellung einer Kreuzung mit einer rechts-vor-links Verkehrsregelung;
- Fig. 2: eine schematische Darstellung eines Kraftfahrzeugs mit einem Fahrerassistenzsystem gemäß einer Ausführungsform der Erfindung; und
- Fig. 3: eine schematische Darstellung eines Verfahrens zum Betreiben eines Fahrerassistenzsystems gemäß einer Ausführungsform der Erfindung.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

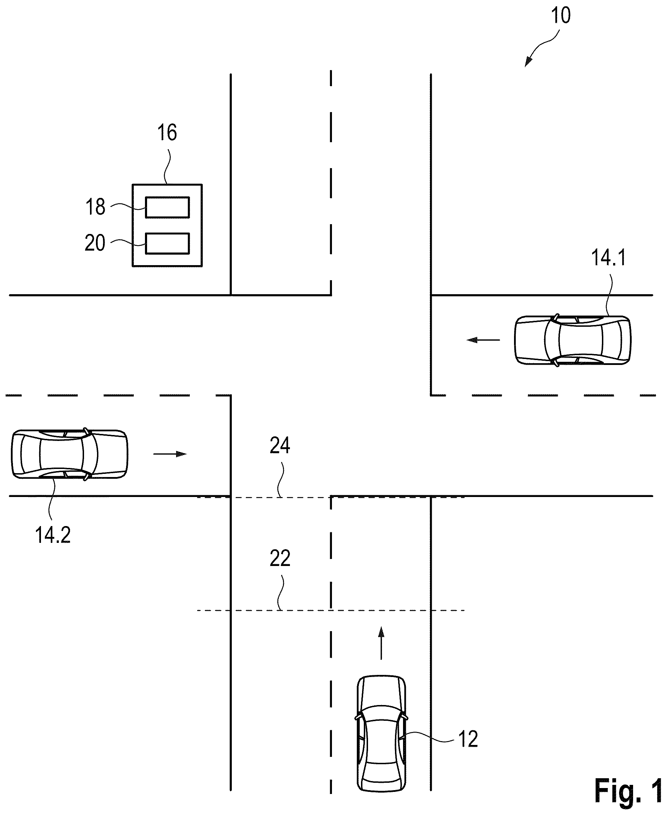

Fig. 1 zeigt eine schematische Darstellung einer Kreuzung 10 mit rechts-vor-links Verkehrsregelung. Im hier dargestellten Beispiel fahren drei Kraftfahrzeuge auf die Kreuzung zu: das Ego-Fahrzeug 12 und zwei Kraftfahrzeuge 14.1, 14.2 des Querverkehrs. Aus Sicht des Ego-Fahrzeugs 12 kommt nur das Kraftfahrzeug 14.1 als vorfahrtsberechtigter Querverkehr in Betracht, da es sich von rechts der Kreuzung 10 nähert. An der Kreuzung 10 befindet sich außerdem eine Infrastrukturkomponente 16, beispielsweise eine Anlage zur Messung der Luftqualität an der Kreuzung 10. Die Infrastrukturkomponente 16 kann einen hier nicht näher erläuterten Sensor 18 oder auch mehrere Sensoren 18 aufweisen, die dazu ausgebildet sind, eine aktuelle Verkehrslage an der Kreuzung 10 zu erfassen. Hierzu können beispielsweise Kamerasensoren gehören. Es ist auch denkbar, dass die Infrastrukturkomponente 16 eine Kommunikationseinheit 20 aufweist, mittels derer sie dazu befähigt ist, Nachrichten der Fahrzeugkommunikation zu empfangen und daraus die aktuelle Verkehrsdichte im Bereich der Kreuzung 10 abzuleiten. Die Kommunikationseinheit 20 kann auch dazu genutzt werden, Informationen bezüglich der aktuellen Verkehrslage an der Kreuzung 10 an das Ego-Fahrzeug 12 zu übermitteln. Hierdurch kann beispielsweise eine schlechte Einsehbarkeit der Kreuzung 10 für das Ego-Fahrzeug 12 zumindest teilweise kompensiert werden.

Fig. 1 zeigt außerdem einen potenziellen Beschleunigungspunkt 22, hier als gestrichelte Linie 22 dargestellt. Mit dieser Linie 22 ist die Stelle gekennzeichnet, ab der ein statistisch signifikanter Anteil von Fremdfahrzeugen, die vor dem Ego-Fahrzeug 12 die Kreuzung 10 in derselben Richtung befahren haben, wie das Ego-Fahrzeug 12, wieder auf eine Ausgangs- oder Setzgeschwindigkeit beschleunigt hat oder die Beschleunigung eingeleitet hat, sofern kein vorfahrtsberechtigter Querverkehr in der Kreuzung 10 oder im Bereich der Kreuzung 10 erkannt wurde oder vorhanden war. Die Beschleunigungslinie 22 liegt hier in Fahrtrichtung vor einem Haltepunkt 24 oder einer Haltelinie 24, die die Stelle markiert, an der ein statistisch signifikanter Anteil von Fremdfahrzeugen, die vor dem Ego-Fahrzeug 12 die Kreuzung 10 in derselben Richtung befahren haben, wie das Ego-Fahrzeug 12, zum Stillstand abgebremst haben, sofern vorfahrtsberechtigter Querverkehr in der Kreuzung 10 oder im Bereich der Kreuzung 10 erkannt wurde oder vorhanden war.

Für die in Fig. 1 beispielhaft gezeigte Situation an der Kreuzung 10 bedeutet die Position der Haltelinie 24, dass das Ego-Fahrzeug 12 dort zum Stillstand abbremsen wird, da vorfahrtsberechtigter Querverkehr in Form des Kraftfahrzeugs 14.1 vorhanden ist. **In** diesem Fall fällt der Beschleunigungspunkt für das Ego-Fahrzeug 12 mit dem Haltepunkt 24 zusammen, da das Ego-Fahrzeug 12 im gezeigten Beispiel von hier aus wieder beschleunigen wird, wenn die Kreuzung 10 wieder frei ist.

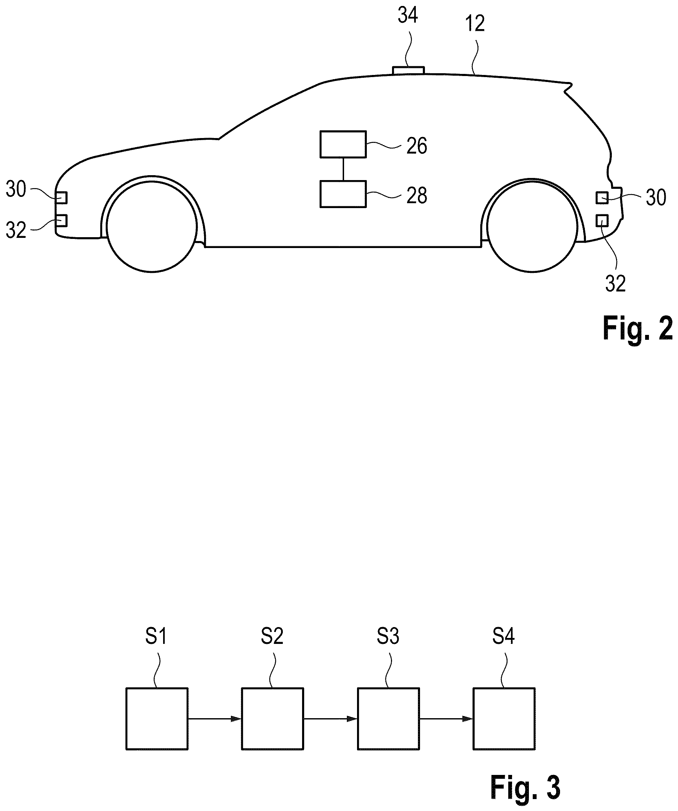

Fig. 2 zeigt eine schematische Darstellung eines Kraftfahrzeugs 12 mit einem Fahrerassistenzsystem 26. Im gezeigten Beispiel ist das Fahrerassistenzsystem 26 kommunikativ mit einem Antriebssystem 28 des Kraftfahrzeugs 12 verbunden bzw. kann dieses derart ansteuern, dass über das Antriebssystem 28 eine Fahrtgeschwindigkeit des Kraftfahrzeugs 12 eingestellt, geändert und/oder gehalten werden kann.

Das Kraftfahrzeug 12 der Fig. 2 weist außerdem noch ein Sensorsystem auf, aus dem stellvertretend und beispielhaft lediglich Kamerasensoren 30 und Radarsensoren 32 gezeigt sind. Bei den Radarsensoren 32 kann es sich um Sensoren eines Front-Eck-Radarsystems des Kraftfahrzeugs 12 handeln. Mittels der Sensoren 30, 32 des Sensorsystems kann das Kraftfahrzeug 12 seine Umgebung erfassen und kann beispielsweise die Kreuzung 10 auf das Vorhandensein von vorfahrtsberechtigtem Querverkehr überwachen. Das Kraftfahrzeug 12 kann außerdem eine Kommunikationseinheit 34 aufweisen, die ebenfalls kommunikativ mit dem Fahrerassistenzsystem 26 verbunden sein kann. Mittels der Kommunikationseinheit 34, die beispielsweise zumindest eine Antenne umfassen kann, kann das Kraftfahrzeug 12 beispielsweise Informationen bezüglich eines aktuellen Verkehrsgeschehens auf der Kreuzung 10 von der Infrastrukturkomponente 16 und/oder mittels Fahrzeug-zu-Fahrzeug-Kommunikation von den Fremdfahrzeugen 14 empfangen.

Unter Bezugnahme auf die im Zusammenhang mit den Fig. 1 und 2 bezeichneten und beschriebenen Komponenten zeigt Fig. 3 eine schematische Darstellung eines Verfahrens zum Betreiben eines Fahrerassistenzsystems 26 eines Kraftfahrzeugs 12 beim Befahren einer Kreuzung 10 in Abhängigkeit von einer erkannten rechts-vor-links Verkehrsregelung an der Kreuzung 10 gemäß einer Ausführungsform der Erfindung.

Ein Schritt S1 umfasst das Anfahren der Kreuzung 10 mit einer ursprünglich gesetzten Fahrtgeschwindigkeit. Mit anderen Worten kann das Fahrerassistenzsystem 26 das Kraftfahrzeug 12 mit der gesetzten Fahrtgeschwindigkeit an die Kreuzung 10 heranfahren. In einem Schritt S2 erfolgt bei Einfahren des Kraftfahrzeugs 12 in einen vorbestimmten Umkreis um die Kreuzung 10 ein Erkennen der rechts-vor-links Verkehrsregelung an der Kreuzung 10, beispielsweise als Kreuzungsattribut aus Kartendaten zu der Kreuzung 10. Außerdem erfolgt ein Erkennen eines der Kreuzung 10 zugeordneten Haltepunkts 24 und eines der Kreuzung 10 zugeordneten Beschleunigungspunkts 22, jeweils beispielsweise anhand einer statistischen Auswertung vorangegangener Befahrungen der Kreuzung 10. Bei einer Annäherung des Kraftfahrzeugs 12 an den Haltepunkt 24 erzeugt das Fahrerassistenzsystem 26 in einem Schritt S3 einen Hinweis bezüglich der erkannten rechts-vor-links Verkehrsregelung an einen Fahrer des Kraftfahrzeugs 12. Alternativ oder zusätzlich greift das Fahrerassistenzsystem 26 bei einer Annäherung des Kraftfahrzeugs 12 an den Haltepunkt 24 in einem Schritt S4 selbstständig zum Reduzieren der ursprünglich gesetzten Fahrtgeschwindigkeit des Kraftfahrzeugs 12 auf eine gegenüber der ursprünglich gesetzten Fahrtgeschwindigkeit reduzierte Annäherungsgeschwindigkeit in ein Antriebssystem 28 des Kraftfahrzeugs 12 ein.

Heutige Fahrerassistenzsysteme reagieren nicht auf Kreuzungen, die durch Rechts-Vor-Links (RvL) geregelt werden. Allerdings muss der Fahrer ggf. Vorfahrt gewähren bzw. muss bei schlecht einsehbaren Kreuzungen die Geschwindigkeit reduzieren.

Die vorliegende Erfindung schlägt daher am Beispiel einer aktiven Längsführung (ACC) vor, zunächst die Verkehrsregelung der nächstgelegenen Kreuzung zu identifizieren (z.B. anhand von Kartendaten, erkannten Schilder/Ampeln). Handelt es sich um eine RvL Kreuzung, wird die Setzgeschwindigkeit des ACC reduziert, um dem Fahrer eine komfortable Bewertung der Situation zu ermöglichen. Im Falle eines detektierten, vorfahrtsberechtigten Querverkehrs hält das ACC an einem geeigneten Haltepunkt an. Wird kein relevanter Querverkehr detektiert, beschleunigt das ACC auf die ursprüngliche Setzgeschwindigkeit. Eine weitere Ausführungsform kann sein, dem Fahrer die Möglichkeit zu geben, den Anhaltevorgang manuell auszulösen (z.B. Tastendruck, Geste, Bremspedal-Tipp). Der Bereich, in dem die Geschwindigkeit reduziert wird, und der Wert der reduzierten Geschwindigkeit kann z.B. aus Schwarmdaten (Schwarmgeschwindigkeit) abgeschätzt werden.

Insgesamt zeigen die Beispiele, wie durch die Erfindung ein Verfahren zur Unterstützung in Rechts-Vor-Links Situationen durch ein Fahrerassistenzsystem bereitgestellt werden kann.

### Bezugszeichenliste

- 10: Kreuzung
- 12: Kraftfahrzeug, Ego-Fahrzeug
- 14: Kraftfahrzeug, Fremdfahrzeug
- 16: Infrastrukturkomponente
- 18: Sensor der Infrastrukturkomponente
- 20: Kommunikationseinheit der Infrastrukturkomponente
- 22: Beschleunigungspunkt
- 24: Haltepunkt
- 26: Fahrerassistenzsystem
- 28: Antriebssystem
- 30: Kamerasensor
- 32: Radarsensor
- 34: Kommunikationseinheit des Ego-Fahrzeugs

## Patentansprüche

1. Verfahren zum Betreiben eines Fahrerassistenzsystems (26) eines Kraftfahrzeugs (12) beim Befahren einer Kreuzung (10) in Abhängigkeit von einer erkannten rechts-vor-links Verkehrsregelung an der Kreuzung (10), umfassend die Schritte
a) Anfahren (S1) der Kreuzung (10) mit einer ursprünglich gesetzten Fahrtgeschwindigkeit,
b) bei Einfahren in einen vorbestimmten Umkreis um die Kreuzung (10), Erkennen (S2) der rechts-vor-links Verkehrsregelung an der Kreuzung (10), eines der Kreuzung (10) zugeordneten Haltepunkts (24) und eines der Kreuzung (10) zugeordneten Beschleunigungspunkts (22),
wobei das Fahrerassistenzsystem (26) bei einer Annäherung des Kraftfahrzeugs (12) an den Haltepunkt (24)
c) einen Hinweis bezüglich der erkannten rechts-vor-links Verkehrsregelung an einen Fahrer des Kraftfahrzeugs (12) erzeugt (S3), und/oder
d) selbstständig zum Reduzieren der ursprünglich gesetzten Fahrtgeschwindigkeit des Kraftfahrzeugs (12) auf eine gegenüber der ursprünglich gesetzten Fahrtgeschwindigkeit reduzierte Annäherungsgeschwindigkeit in ein Antriebssystem (28) des Kraftfahrzeugs (12) eingreift (S4).

2. Verfahren nach Anspruch 1, wobei als Hinweis gemäß Schritt c) ein optischer und/oder ein akustischer und/oder ein haptischer Hinweis für den Fahrer erzeugt wird, wobei der Hinweis insbesondere die Reduzierung der ursprünglich gesetzten Fahrtgeschwindigkeit gemäß Schritt d) umfasst.

3. Verfahren nach einem der vorhergehenden Ansprüche, umfassend die durch das Fahrerassistenzsystem (26) durchgeführten Schritte
e) sensorbasiertes Überwachen der Kreuzung (10) im Hinblick auf vorfahrtsberechtigten Querverkehr, wobei
falls vorfahrtsberechtigter Querverkehr erkannt wird,
f) Abbremsen des Kraftfahrzeugs (12) zum Stillstand am Haltepunkt (24), und
falls kein vorfahrtsberechtigter Querverkehr erkannt wird,
g) selbstständiges Eingreifen in das Antriebssystem (28) des Kraftfahrzeugs (12) zum Beschleunigen des Kraftfahrzeugs (12) ab dem Beschleunigungspunkt (22) auf die ursprünglich gesetzte Fahrtgeschwindigkeit zum Durchfahren der Kreuzung (10).

4. Verfahren nach Anspruch 3, wobei das Fahrerassistenzsystem (26) zum sensorbasierten Überwachen gemäß Schritt e) kraftfahrzeugeigene Sensoren (30, 32) ansteuert und/oder Sensordaten von Sensoren (18) zumindest einer Infrastrukturkomponente (16) im Bereich der Kreuzung (10) und/oder Sensordaten von Fremdfahrzeugen (14) im Bereich der Kreuzung (10) empfängt und/oder auswertet.

5. Verfahren nach einem der vorhergehenden Ansprüche, wobei das Fahrerassistenzsystem (26) zum Erkennen der rechts-vor-links Verkehrsregelung an der Kreuzung (10) gemäß Schritt b) zunächst
b1) Kandidatenkreuzungen, die rechts-vor-links Kreuzungen (10) sein könnten, anhand von Sensordaten eines Kamerasensors (32) des Kraftfahrzeugs (12) und/oder anhand von Sensordaten von Fremdfahrzeugen (14) im Bereich einer jeweiligen Kreuzung (10) und/oder anhand von Kartendaten bestimmt, und dann
b2) die Kandidatenkreuzungen als rechts-vor-links Kreuzungen (10) verifiziert oder falsifiziert, basierend auf der Erkennung weiterer Infrastrukturkomponenten (16) an einer jeweiligen Kreuzung (10).

6. Verfahren nach einem der vorhergehenden Ansprüche, wobei das Fahrerassistenzsystem (26) zum Erkennen des der Kreuzung (10) zugeordneten Haltepunkts (24) und des der Kreuzung (10) zugeordneten Beschleunigungspunkts (22) gemäß Schritt b) eine statistische Auswertung einer Vielzahl von Geschwindigkeitsprofilen von Fremdfahrzeugen (14) beim vorangegangenen Befahren der Kreuzung (10) durchführt.

7. Verfahren nach Anspruch 6, wobei bei der statistischen Auswertung berücksichtigt wird, ob bei einem jeweiligen vorangegangen Befahren der Kreuzung (10) durch ein Fremdfahrzeug (14) vorfahrtsberechtigter Querverkehr vorhanden war, oder nicht.

8. Verfahren nach einem der vorhergehenden Ansprüche, wobei das Reduzieren der ursprünglich gesetzten Fahrtgeschwindigkeit gemäß Schritt d) das Verlangsamen des Kraftfahrzeugs (12) um einen vorbestimmten Prozentsatz und/oder das Verlangsamen des Kraftfahrzeugs (12) um einen absoluten Geschwindigkeitswert umfasst.

9. Fahrerassistenzsystem (26) für ein Kraftfahrzeug (12), das dazu ausgebildet ist, nach einem Verfahren gemäß einem der vorhergehenden Ansprüche betrieben zu werden.

10. Kraftfahrzeug (12) mit einem Fahrerassistenzsystem (26) nach Anspruch 9.
